# FASCICULE DE BREVET EUROPEEN

(11) **EP 1 285 250 B1**
(45) Date de publication et mention de la délivrance du brevet: **29.07.2009**
(21) Numéro de dépôt: 01940656.0
(22) Date de dépôt: 31.05.2001
(51) Int. Cl.: G01N 1/08, E21B 25/00, E21B 49/02, E21B 11/00

(54) **DISPOSITIF DE PRISE D'ECHANTILLONS DANS UN MATERIAU DE CONSTITUTION GRANULEUSE OU PULVERULENTE**
VORRICHTUNG ZUR PROBENAHME VON PULVRIGEN ODER KÖRNIGEN PRODUKTEN
DEVICE FOR TAKING SAMPLES FROM A MATERIAL OF GRANULAR OR POWDERY COMPOSITION

(30) Priorité: 31.05.2000 FR 0007021
(43) Date de publication de la demande: 26.02.2003
(73) Titulaire: Agro-Systemes S.A., 37390 La Membrolle sur Choisille (FR)
(72) Inventeur: GAREL, Bertrand, F-37390 La Membrolle sur Choisille (FR)
(74) Mandataire: Debay, Yves
(86) Numéro de dépôt international: PCT/FR2001/001696
(87) Numéro de publication internationale: WO 2001/092847

(56) Documents cités:
- CA-A- 1 255 514
- DE-A- 3 707 589
- DE-A- 4 200 426
- DE-A- 19 711 305
- DE-U- 7 925 902
- FR-A- 2 702 563
- GB-A- 532 371
- GB-A- 1 077 122
- US-A- 5 408 893

## Description

La présente invention concerne un dispositif de prise d'échantillons dans un matériau de constitution granuleuse ou pulvérulente. L'invention concerne plus particulièrement une tarière pour prélever des échantillons dans un sol humide ou carottes,

Il est connu dans l'art antérieur différents types de tarière. En règle générale, l'étude de la composition du terrain se fait de la manière suivante. Dans un champs, 10 prélèvements sont effectués autour d'un cercle de 10 mètres de rayon. On prélève en général à différentes profondeurs suivant les substances que l'on souhaite détecter. Par exemple, pour étudier la composition en nitrates du terrain, il faut descendre jusqu'à 90 cm environ. L'étude de la composition en nitrates se fait préférentiellement entre octobre et mars, époque de l'année où le sol est le plus humide et où il sera donc plus aisé de descendre jusqu'à la profondeur de 90 cm. Pour d'autres éléments composant le sol, l'utilisateur pourra avoir intérêt à prélever à des profondeurs inférieures, par exemple 30 ou 60 cm.

Il existe un type de tarière, constitué d'une tige métallique allongée surmontée d'un volant destiné à la faire tourner pour qu'elle s'enfonce et terminée par un dispositif en forme de vrille, destiné à creuser jusqu'à la profondeur désirée et permettant de recueillir l'échantillon à cette profondeur par rotation à l'aide d'un disque hélicoïdal coupant pour le document GB 532 371. Le problème de cette tarière réside dans le fait que le même dispositif, à savoir la vrille, permet à la fois de creuser et de recueillir l'échantillon. Il paraît donc évident que de la terre dégagée pendant la pénétration de la vrille puisse venir se mélanger à la terre prélevée à la profondeur désirée.

De plus, si on souhaite effectuer des prélèvements à différentes profondeurs, il faut enfoncer la tarière jusqu'à une première profondeur puis la remonter avec l'échantillon prélevé à cette profondeur et il faut redescendre la tarière jusqu'à une nouvelle profondeur, et la remonter avec un nouvel échantillon prélevé à cette nouvelle profondeur. Cette manipulation est longue et pénible.

Enfin il s'avère souvent difficile d'enfoncer la tarière jusqu'à 90 cm et de la remonter, du fait des frottements s'exerçant sur la vrille et sur la tige lorsque l'outil s'enfonce.

Un type de tarière est décrite dans le document DE 4200426. Cette tarière est composée d'une tête d'enfoncement constituée d'une pointe fixée à une extrémité de la tige. Cette tige comportant plusieurs cavités alignées est entourée d'une enveloppe coaxiale pivotant sur l'axe du dispositif permettant ainsi la fermeture des cavités. Les bords de l'enveloppe autorisent le raclement du matériau dans lequel le dispositif est enfoncé, matériau qui est ramené dans les cavités alignées. Cette enveloppe coaxiale pivotante ajoute un système mécanique au dispositif qui peut ne pas être efficace dans certaines conditions d'utilisation pouvant provoquer le grippage de cette enveloppe avec la tige.

Un autre type de tarière est divulgué dans le document DE 3707589. Cette tarière comprend une tête d'enfoncement constituée d'une pointe qui est fixée à l'extrémité de la tige. La tête comprend une partie déportée vers l'extérieur, la section de la tête à cet endroit étant supérieure à la section de la tige. La tige a une section en forme de trapèze rectangle. La tige est creusée sur sa longueur à intervalles réguliers. La terre vient se loger dans les creux formés le long de la tige par un raclage effectué par rotation de la tige. Lors de la rotation, le raclage est effectué par la partie saillante formée le long de fa tige par le côté en oblique de la section de la tige. La partie déportée de la tête d'enfoncement est formée en aplomb de cette partie saillante pour élargir le trou et ainsi laisser une certaine liberté de rotation à la partie saillante dans la partie élargie du trou lorsque la tarière est enfoncée. Une fois la rotation de la tige entamée, la partie saillante n'est plus dans la partie élargie du trou et vient au contact de la terre présente sur les parois latérales du trou à l'endroit où le trou n'est pas élargi. Lors de l'enfoncement de ce type de tarière, la tige subit les frottements de la terre et il devient difficile d'enfoncer la tarière. Ce type de tarière est constitué de plusieurs éléments et ne comprend aucun moyen spécifique pour supporter l'onde de choc générée lors de son enfoncement à l'aide d'un outil tel qu'un marteau. De plus ce type de tarière ne permet pas d'effectuer un prélèvement sur toute la profondeur.

Un autre type de tarière est décrite dans le document DE 197 11 305. Cette tarière est composée d'un tube creux comprenant également une tête d'enfoncement. Le dispositif a pour but principal de faciliter l'enfoncement de la tarière dans le sol à l'aide d'une pédale. L'échantillon est recueilli à l'intérieur du tube creux et est extrait du tube creux par un système de piston. De part ce système de pédale, la profondeur d'enfoncement de la tarière est limitée par la taille de l'utilisateur qui doit pouvoir poser le pied assez haut sur la pédale et ainsi enfoncer la tarière.

De plus, un autre type de tarière est divulguée dans le document GB 1 077 122. Elle a pour but de prélever des échantillons de matière granuleuse ou pulvérulente telle que du grain. Or, un tel dispositif ne permet pas de prélever une matière moins meuble que le grain comme de la terre humide où un système de raclement de la matière est indispensable. Le document CA 1 255 514 améliore ce dispositif de prélèvement de grain en ajoutant une nervure hélicoïdale à la tête d'enfoncement, facilitant ainsi l'enfoncement. Ce dispositif, comme le précédent, n'est pas adapté au prélèvement de matière moins meuble.

Un autre dispositif de tarière décrit dans le document US 5 408 893 permet de d'extraire des échantillons de afin d'en déterminer le taux d'humidité. Elle est composée d'une tige dont une des extrémités est formée d'une protubérance permettant de recueillir une petite quantité de sol à une profondeur requise lors de l'extraction du dispositif. Ce dispositif ne permet pas d'obtenir des échantillons pour toute la profondeur d'enfoncement de la tarière et la pollution de l'échantillon par les couches supérieures du sol est importante.

Un autre type de tarière est présenté dans le document DE 79 25 902. Ce dispositif est composé d'un tube muni d'une fente sur toute la longueur du tube. L'un des bords de la fente est légèrement protubérant pour racler le sol par rotation de la tarière. Cependant, avec un tel dispositif, l'échantillon prélevé lors de son extraction est mal retenu et lors de l'enfoncement, l'échantillon prélevé est modifié en créant un mélange des couches supérieures du sol avec les couches inférieures du sol.

Le document FR 2 702 563 décrit un dispositif de tarière, monté sur le chassis d'un véhicule, à prélèvement d'échantillons de sol. La sonde est une tige munie d'un évidement est enfoncée en rotation par un moteur. Un système de doigts permet de récupérer l'échantillon le long de l'évidement. Ce système de permet pas de connaître avec précision à quelle profondeur a été extraite un partie de l'échantillon.

La présente invention a donc pour objet de pallier les inconvénients de l'art antérieur en proposant une tarière, constituée d'un moyen d'enfoncement de la tarière ayant une forme permettant de réduire les frottements du matériau sur l'outil lors de son enfoncement ou de sa remontée. De plus, la tarière selon l'invention permet de recueillir des échantillons du matériau sur toute la profondeur en un seul enfoncement de l'outil.

Cet objectif est atteint par un dispositif de prélèvement d'échantillons dans un matériau de constitution granuleuse ou pulvérulente, comprenant une tige à une extrémité de laquelle est monté un volant destiné à faire tourner l'outil et à l'autre extrémité de laquelle se trouve une tête d'enfoncement, caractérisé en ce que la tête est montée symétriquement sur la tige et comprend des parties inférieures et latérales ayant une forme profilée, la tige ayant une forme déterminée pour effectuer un raclement du matériau sur toute la profondeur et la tête ayant une section transversale inférieure, égale ou supérieure à la section transversale de la tige, dans des proportions déterminées en fonction de la nature et/ou de l'humidité du matériau à prélever.

La tige comporte au moins une rainure longitudinale et dispose, dans le prolongement d'une des faces internes de la rainure, d'une partie faisant saillie vers l'extérieur de la tige qui, sur toute la longueur de la tige, permet de racler la terre par rotation de la tige.

Selon une autre particularité, la section transversale de la tige a la forme d'une spirale rainurée vers l'intérieur de la section suivant la ligne de jonction des deux extrémités libres de la spirale pour former une partie saillante.

Selon une autre particularité, la section transversale de la tige a la forme d'un disque rainuré vers l'intérieur de la section, un des bords du disque, situé de part et d'autre de la rainure, étant étiré vers l'extérieur pour former la partie saillante.

Selon une autre particularité, la section de la tête est supérieure à la section du corps principal de la tige, c'est-à-dire pris sans la partie saillante, dans une proportion maximale de 40%.

Selon une autre particularité, la partie saillante est amovible de la tige.

Selon une autre particularité, la partie saillante est inclinée d'un certain angle vers l'extérieur dans le sens opposé au sens de raclage.

Selon une autre particularité, la tige est creuse et en ce qu'une face interne de la rainure, appartenant à la partie saillante, est ouverte de manière à laisser pénétrer la terre dans la tige creuse lors de la rotation de la tarière.

Selon une autre particularité, la rainure est parallèle à un plan radial de la tige.

Selon une autre particularité, section transversale de la tige peut avoir des dimensions variables le long de la tige.

Selon une autre particularité, la section transversale de la tige sur la partie supérieure de la tige a des dimensions supérieures à la section sur la partie inférieure de la tige de manière à prélever la terre sèche en surface.

Selon une autre particularité, la rainure est suffisamment large pour recueillir la terre raclée lors de la rotation de la tige.

Selon une autre particularité, la tige est graduée de bas en haut de manière à connaître la profondeur d'enfoncement de l'outil.

Selon une autre particularité, la tête a la forme d'une olive montée symétriquement sur la tige suivant le plus grand axe de l'olive.

Selon une autre particularité, plusieurs diamètres de tête en olive sont disponibles suivant la nature et/ou l'humidité du terrain.

Selon une autre particularité, les têtes en olive sont vissées sur la tige.

Selon une autre particularité, une barre transversale par rapport à l'axe de la tige placée entre le volant et la tête permet de faciliter la pénétration de l'outil dans le sol.

Selon une autre particularité, sur le volant, se dresse au moins une poignée pour faciliter la préhension de l'outil lors de sa rotation.

Selon une autre particularité, un moyen d'entraînement est destiné à enfoncer la tarière dans le sol.

Selon une autre particularité, le dispositif comporte à son extrémité opposée à l'extrémité d'enfoncement, un embout mâle destiné à s'accoupler coaxialement avec un embout femelle d'un marteau à inertie, une tige coulissant dans le marteau à inertie, dans le prolongement de l'embout femelle, pour venir frapper l'embout mâle afin d'enfoncer le dispositif.

Selon une autre particularité, le volant est flottant par l'intermédiaire d'éléments d'amortissement permettant d'amortir l'onde de choc et les vibrations générées lors de la frappe.

L'invention, avec ses caractéristiques et avantages, ressortira plus clairement à la lecture de la description faite en référence aux dessins annexés dans lesquels :
- la figure 1 représente une vue en perspective d'une tarière selon l'invention enfoncée dans le sol,
- la figure 2 représente la partie inférieure d'une tarière selon l'invention après une rotation de l'outil,
- la figure 3 représente une vue de dessus de la tige enfoncée dans le sol,
- la figure 4 représente une variante de réalisation de la section transversale de la tige,
- la figure 5 représente, la tarière selon l'invention et le marteau frappeur,
- la figure 6 représente un dispositif porte tout.

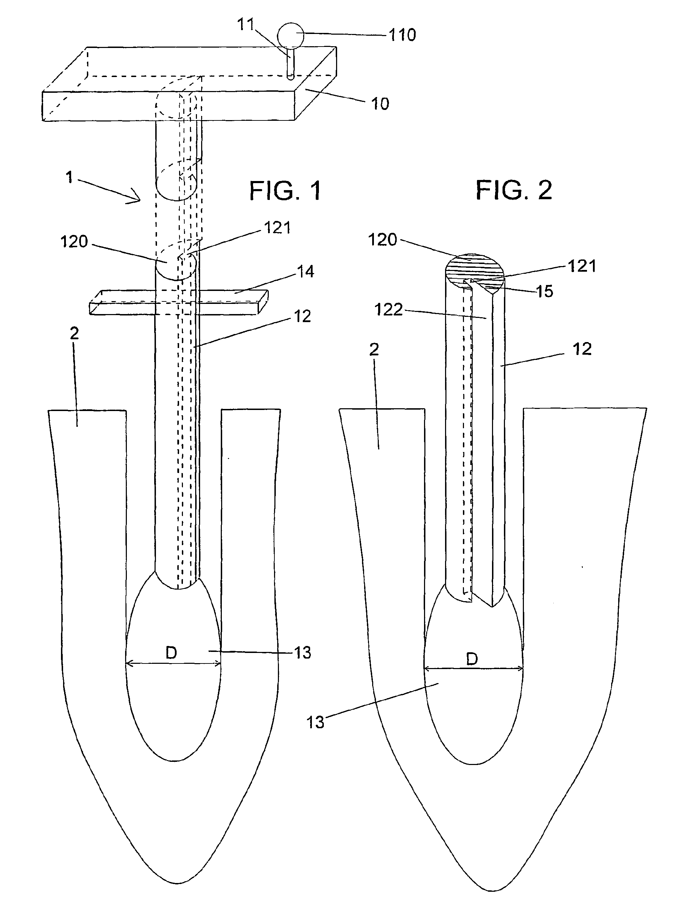

L'invention sera décrite en liaison avec les figures 1 à 6.

Le dispositif de prélèvement d'échantillon ou tarière (1), selon l'invention, représenté en figure 1, est destiné à être enfoncé jusqu'à une certaine profondeur dans tout type de matériau ayant une constitution granuleuse ou pulvérulente pour y prélever des échantillons qui pourront être analysés. Le dispositif de prélèvement selon l'invention pourra donc être enfoncé dans des matières organiques du type engrais de ferme tel que, par exemple du fumier, des litières, des fientes, du type composts, boues solides ou dans des déchets. Le dispositif selon l'invention pourra être enfoncé dans des fourrages tels que des aliments conservés en silo comme par exemple le maïs. Le dispositif selon l'invention sera destiné également à être enfoncé dans le sol jusqu'à une certaine profondeur pour y prélever des échantillons, par exemple de terre, de neige ou de sable qui pourront être analysés, afin de connaître la teneur du terrain en diverses substances. Dans le cas où le sol est de la terre, l'analyse pourra porter sur des substances telles que par exemple les nitrates, les métaux lourds ou les pesticides. D'autres utilisations du dispositif sont également possibles. Le dispositif selon l'invention pourra permettre également d'effectuer du sondage de sol de manière à déterminer statistiquement la profondeur moyenne du sol accessible par les racines ou par tout type d'outil de travail du sol, ou de calculer différents paramètres tels que par exemple, la réserve hydrique du sol. De même, une autre utilisation pourra concerner l'observation des différentes couches du sol à des fins scientifiques ou pédagogiques.

Dans le cadre de la prise d'échantillons de terre dans le sol (2), on procède de la manière suivante. Dans un champ, à différents endroits, plusieurs prélèvements sont effectués à différentes profondeurs suivant la substance que l'on souhaite détecter. Par exemple, les nitrates se détectent à une profondeur de 90 cm environ ce qui nécessite un terrain suffisamment meuble pour enfoncer la tarière (1). C'est pourquoi les analyses d'un sol en nitrates sont généralement effectuées entre octobre et mars, époque de l'année où le sol (2) est le plus humide donc le plus souple.

Le dispositif de l'invention ou tarière (1), est préférentiellement utilisée pour des terrains humides pour faciliter son enfoncement mais peut être utilisée aussi en sol (2) sec.

La tarière (1) selon l'invention représentée en figure 1, est constituée d'une tige (12), surmontée d'un volant (10) servant pour enfoncer ou remonter la tarière, ce volant (10) comprenant une poignée (11) pour faciliter la préhension du volant (10) lorsque l'on effectue une rotation de l'outil pour prélever la terre. Ce volant (10) pourra comprendre, par exemple, une boule (110), libre en rotation sur la poignée (11) du volant (10) et permettant de faciliter la manipulation de l'outil lors de sa rotation. La tarière (1) selon l'invention est terminée par une tête (13) profilée, par exemple en forme d'olive pour que la terre glisse bien le long de la tête (13) sans coller à la tige (12) lorsque la tarière (1) est enfoncée ou remontée. La tête (13) sera donc profilée sur ses parties inférieures et sur ses parties supérieures, ces deux parties étant délimitées par la partie de la tête (13) comprenant la section maximale de la tête (13). Les parties inférieures profilées de la tête (13) permettent à la terre de fluer lors de l'enfoncement de la tarière (1) dans le sol et les parties supérieures profilées de la tête (13) permettent à la terre de fluer le long de la tête lors de la remontée de la tarière (1).

La tête (13) pourra également avoir une forme dissymétrique. La tête (13) en olive est montée, par exemple, symétriquement sur la tige (12) pour que la terre glisse bien le long de la tête (13) tout autour de la tige (12) sans coller à la tige (12). La tête (13) peut par exemple être vissée sur la tige (12). D'autres moyens de fixation de la tête (13) peuvent être envisagés tels que par exemple le clipsage ou le soudage. Une barre transversale (14) fixée sur la tige (12) permet de faciliter le début de la pénétration de la tarière (1) dans la couche de surface moins humide du sol (2) en fournissant un point d'appui pour les pieds ou les genoux. Cette barre (14) est placée, par exemple symétriquement sur la tige (12), à une hauteur légèrement supérieure à 90 cm.

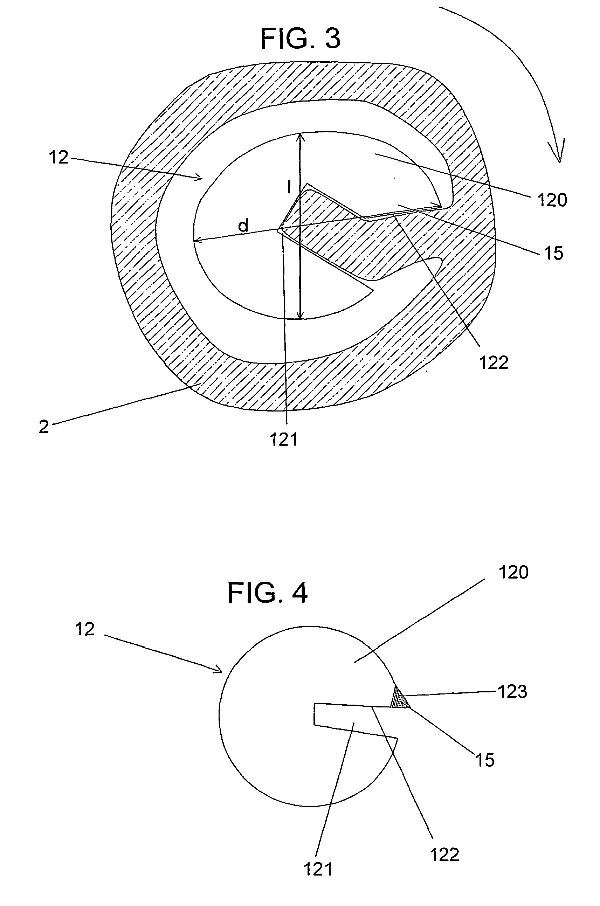

La tige (12) est destinée à recueillir un échantillon de terre sur toute la profondeur à laquelle la tarière (1) a été enfoncée, par exemple 90 cm. Ainsi, l'utilisateur dispose d'un échantillon global et il n'est pas nécessaire de faire plusieurs prélèvements à différentes profondeurs pour un même endroit. Pour cela, la tige (12) selon l'invention, comporte une section (120) transversale ayant une forme spécifique pour effectuer un prélèvement de terre. Ce prélèvement de terre sera effectué, par exemple, par raclement de terre. Pour cela, la section (120) de la tige (12) aura, par exemple une forme de spirale aplatie pour pouvoir facilement tourner lorsque l'utilisateur effectue le prélèvement. Une rainure, ayant par exemple la forme d'un canal (121), est réalisée vers l'intérieur de la section suivant la ligne de jonction des deux extrémités libres de la section en spirale. La partie saillante, formée sur toute la longueur de la tige (12) de par la section en spirale, racle la terre du forage effectué par la tête (13) qui vient alors se loger dans le canal (121). Cette partie saillante constitue donc une lèvre de raclage (15) permettant de prélever la terre sur toute la longueur de la tige (12). La lèvre de raclage (15) sera par exemple, comme représenté sur la figure 3, inclinée vers l'extérieur d'un certain angle dans le sens opposé au sens de raclage définie par la flèche recourbée sur la figure 3. La tige (12) est graduée sur toute sa longueur de bas en haut de manière à visualiser la profondeur d'enfoncement de l'outil et à prélever l'échantillon sur la longueur de la tige (12) à la profondeur souhaitée une fois la tarière (1) remontée.

La section maximale de la tête (13) sera inférieure, égale ou supérieure à la section de la tige (12). La grosseur de la tête (13) variera en fonction de la nature du terrain ou du matériau dans lequel la tarière (1) selon l'invention est enfoncée.

Lorsque la section de la tête (13) est inférieure à la section de la tige (12), seule l'extrémité de la lèvre de raclage (15) de la tige (12) fait saillie par rapport à la tête (13). Cette saillie sera de quelques millimètres, au maximum de 5 mm et préférentiellement de 3 mm. Cette saillie ne gênera pas l'enfoncement ou la remontée de la tarière (1) dans le sol (2) du fait de la surface peu importante exposée et susceptible d'être soumise aux frottements dus à la terre lors de la descente ou de la remontée de la tarière (1).

La tête (13) pourra également avoir une section maximale supérieure à la section de la tige (12). Dans ce cas, la lèvre de raclage ne fera pas saillie par rapport à la section maximale de la tête (13) et sera donc entièrement protégée par la tête (13) lors de la descente ou de la remontée de la tarière (1) selon l'invention. Cette section sera au maximum 40% plus grosse que la section du corps principal de la tige (12), c'est à dire prise sans la lèvre de raclage (15). Dans ce cas, l'extrémité de la lèvre de raclage (15) pourra être par exemple à une distance de 0,5 mm par rapport à la section maximale de la tête (13). La section de la tête (13) sera préférentiellement de 0 à 30 % plus importante que celle du corps principal de la tige (12).

Une section égale ou supérieure de la tête (13) par rapport à la section de la tige (12) sera envisageable en particulier lorsque le sol (2) est humide. En effet, dans le cas où le sol est humide, lorsque la tarière (1) est en cours d'enfoncement ou complètement enfoncée, la terre se détend et vient se plaquer contre la tige (12). La terre revenant vers la tige (12) pourra alors être raclée par la lèvre de raclage (15) qui pourtant ne fait pas saillie à l'extérieur de la tête (13). Dans tous les cas, la tête (13) est profilée et permettra de faciliter l'enfoncement et la remontée de la tarière (1) en évitant les frottements de la terre le long de la tige (12) lorsque la tarière (1) est enfoncée ou remontée.

La lèvre de raclage (15) formée peut, par exemple, être plus prononcée sur la partie supérieure que sur la partie inférieure de la tige (12). En effet, la terre est généralement plus sèche en surface, elle aura donc tendance à moins se détendre pour revenir vers la tige (12), un rayon d'action de raclage plus important sera donc nécessaire pour aller prélever la terre.

Le dispositif fonctionne de la manière suivante. Pour l'analyse des diverses substances dont les nitrates d'un sol (2) humide, la tarière (1) est enfoncée jusqu'à une profondeur de 90 cm, visualisée sur les graduations de la tige (12), grâce à la tête (13) en olive par pression sur le volant (10) avec les mains et le buste et sur la barre transversale intermédiaire (14) avec les pieds. La tête (13) ayant une forme profilée, la terre glisse alors le long de la tête (13) lors de l'enfoncement de la tarière (1) sans coller à la tige (12) car le sol est humide. Arrivé à la profondeur désirée, l'utilisateur effectue une rotation de la tarière (1) grâce au volant (10), à la poignée (11) et à la boule (110) libre, la terre est alors raclée par la lèvre de raclage (15) de la tige (12) pour venir se loger dans le canal (121). L'utilisateur remonte la tarière (1) et dispose d'un profil complet du terrain sur 90 cm de profondeur. Il peut donc prélever des échantillons ou carottes à différentes profondeurs par exemple tous les 15 cm grâce aux graduations placées sur la tige (12).

Plusieurs diamètres (D) de tête (13) en olive peuvent être utilisés suivant la nature du terrain. En été, quand le sol est sec, la terre ne se détend pas vers le centre du forage, il faudra donc prendre une tête (13) de section transversale légèrement inférieure à la section de la tige (12) de manière à ce que la lèvre de raclage (15) soit saillante par rapport à la tête (13) et qu'elle puisse venir racler la terre sèche. Selon l'invention, les dimensions de tête (13) disponibles vont de 18 à 27 mm de diamètre (D). Le diamètre (D) de l'olive sera choisi en fonction de la nature et/ou de l'humidité du matériau dans lequel la tarière (1) est enfoncée et en fonction des dimensions (I) de la section de la tige (12). La section du corps principal de la tige (12), c'est à dire prise sans la lèvre de raclage (15), aura une dimension, définie par I sur la figure 3, par exemple de 15 ou 18 mm. Le diamètre de la section (120) transversale de la tige (12), définie par d sur la figure 3, est au maximum de 27 mm environ à l'extrémité de la lèvre de raclage. Ce diamètre (d) peut aussi varier le long de la tige (12). En effet, la tige (12) peut disposer d'une lèvre de raclage (15) plus prononcée sur sa partie supérieure, de manière à prélever la terre sèche présente en surface et qui ne se détend vers la tige (12) après l'enfoncement de la tarière (1) selon l'invention.

Selon une autre variante de réalisation représentée figure 4, la section transversale de la tige (12) a la forme d'un disque rainuré formant sur toute la longueur de la tige (12), le canal (121) de récupération de la terre. Un des bords (123) situés de part et d'autre du canal (121) est étiré de manière à former la lèvre de raclage destinée à racler la terre lors de la rotation de la tarière (1). Le canal (121) est creusé pour être préférentiellement décalée et parallèle à un plan radial de la tige (12).

Selon une variante, la lèvre de raclage (15) selon l'invention est amovible de la tige (12). La tige (12) aura, par exemple, une section en forme de disque comme représenté en figure 4. Le canal (121) est creusé sur toute la longueur de la tige (12). La lèvre de raclage (15) pourra venir s'adapter sur la tige (12) à proximité du canal (121). La lèvre de raclage (15) sera, par exemple fixée par clipsage sur la tige (12) suivant l'une des arêtes extérieures du canal (121).

Selon une variante, la lèvre de raclage (15) pourra être, par exemple, articulée pour former une charnière avec la tige (12) sur toute la longueur de la tige (12).

Selon une variante, la lèvre de raclage (15) pourra être une lame plane tranchante ou pourra être également dentée à son extrémité de raclage, les dents pouvant être plus ou moins espacées et plus ou moins saillantes. Ces différentes variantes dans la configuration de la lèvre de raclage dépendent du type de matériau à prélever.

Selon une variante, par exemple lorsque le sol est très mou, le canal (121) de prélèvement pourra être bouché sur toute sa longueur afin d'éviter le remplissage du canal (121) lors de l'enfoncement de la tarière et ainsi de polluer le prélèvement qui va être effectué. Ce moyen d'obturation pourra être constitué d'une tige ayant une forme complémentaire à la forme du canal (121) pour venir coulisser dans le canal (121). Cette tige, une fois la tarière enfoncée, sera retirée par l'utilisateur avant d'effectuer le prélèvement par rotation de la tige (12) de la tarière (1).

Selon une autre variante de réalisation, la tige (12) est creuse et la face (122) interne du canal (121) adjacente à la lèvre de raclage (15) est ouverte de manière à laisser pénétrer la terre lors de la rotation de la tarière (1). La terre, après rotation de la tarière (1), vient donc se loger à l'intérieur du tige (12). Le dévissage de la tête (13) peut, par exemple, permettre de recueillir la carotte de terre formée à l'intérieur du tige (12) après la remontée de la tarière (1).

Selon une autre variante de réalisation, la tarière (1) selon l'invention est adaptée sur un moyen d'entraînement tel que, par exemple, un vérin ou un bras de levier. Le moyen d'entraînement est destiné à enfoncer la tarière (1) dans le sol par pression sur la partie supérieure de la tarière (1). Selon cette variante, des moyens sont destinés à maintenir la tarière (1) sensiblement perpendiculaire au sol lors de son enfoncement par le moyen d'entraînement.

Selon l'invention, en sol suffisamment humide, l'enfoncement de la tarière (1) se fait généralement à la main. Cependant dans certaines situations, il pourra être nécessaire de recourir à l'utilisation d'un marteau à inertie' (16) spécifique. Ceci sera le cas, par exemple lorsque le sol (2) est très tassé ou présente une surface gelée, lorsque le sol (2) est compacté, lorsque le sol (2) est humide mais très argileux, lorsque le sol (2) est caillouteux...

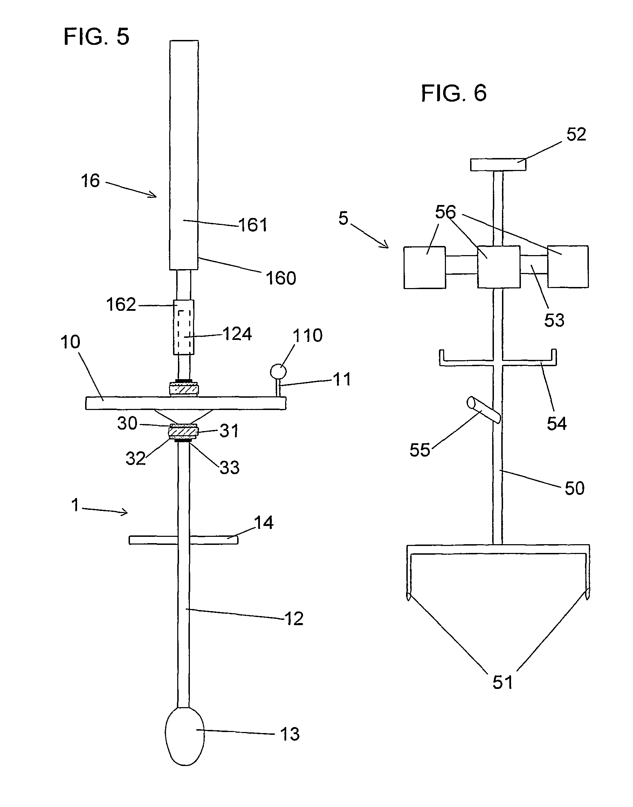

La tige (12) de la tarière (1) se prolonge à l'extrémité opposée à l'extrémité d'enfoncement de la tarière (1) pour former un embout (124) mâle, comme représenté en figure 5. L'embout (124) mâle comportera une tête trempée pour résister aux frappes du marteau. Le marteau à inertie (16) est constitué d'un tube (160) comprenant un manche (161). Dans ce tube (160) est insérée une tige coulissante dont une extrémité est destinée à venir frapper sur l'embout mâle de la tarière (1). Le marteau à inertie (16) comprend une extrémité constituée d'un embout (162) femelle destiné à s'accoupler avec l'embout (124) mâle formé sur la tarière (1). Une pièce en téflon sera insérée dans la tête du marteau pour éviter les répercussions de l'onde de choc lors de la frappe du marteau sur la tarière (1) pour l'enfoncer.

La tarière (1) comportera également un manche flottant permettant d'amortir l'onde de choc et les vibrations générées par la frappe réalisée, par exemple à l'aide du marteau à inertie. La tige (12) sera par exemple assemblée sur le volant (10) par l'intermédiaire d'un élément d'assemblage. Entre la tige et le volant seront positionnés une rondelle (30) en appui contre le volant (10), en dessous de laquelle se trouve un élément d'amortissement constitué d'un élément (31) en caoutchouc en dessous duquel se trouve une autre rondelle (32) serrée contre l'élément (31) en caoutchouc par une goupille (33). Ce système est reproduit au-dessus du volant (10) entre l'embout (124) mâle et le volant (10).

Divers accessoires pourront être utilisés lors d'une opération de prélèvement. Par exemple, un dispositif (5) "porte tout", représenté en figure 6, permettra de porter outils et accessoires nécessaires pour réaliser un prélèvement. Ce dispositif (5) sera constitué d'une tige (50) à une extrémité de laquelle se trouvent en parallèle deux pointes (51) disposées à une certaine distance l'une de l'autre. Ces deux pointes (51) sont destinées à être enfoncée dans le sol à proximité de l'utilisateur de la tarière (1) selon l'invention. Le dispositif (5) comprendra à l'autre extrémité de la tige (50), une poignée (52) de transport et d'enfoncement du dispositif (5) dans le sol. Le dispositif comprendra, par exemple, trois barres (53, 54, 55) transversales. Une première barre (53) transversale, par exemple, supérieure, est destinée à supporter les sachets (56) en plastiques dans lesquels seront placés les échantillons de terre prélevés. La deuxième barre (54) transversale est destinée à supporter des accessoires tels qu'une brosse, un grattoir ou un racloir. Le racloir permettra en particulier de racler la terre logée dans le canal après la remontée de la tarière (1). Une dernière barre (55) transversale permettra, par exemple de reposer la tarière (1).

Il doit être évident pour les personnes versées dans l'art que la présente invention permet des modes de réalisation sous de nombreuses autres formes spécifique sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de prélèvement d'échantillons dans un matériau de constitution granuleuse ou pulvérulente, comprenant une tige (12) à une extrémité de laquelle est monté un volant (10) destiné à faire tourner l'outil et à l'autre extrémité de laquelle se trouve une tête (13) d'enfoncement, ladite tête (13) étant montée symétriquement sur la tige (12) et comprenant des parties inférieures et latérales ayant une forme profilée, la tige (12) ayant une forme déterminée, **caractérisé en ce que** la tige comporte au moins une rainure longitudinale et dispose, dans le prolongement d'une des faces (122) internes de la rainure, d'une partie (15) faisant saillie vers l'extérieur de la tige (12) qui, sur toute la longueur de la tige (12) permet par rotation de la tige (12) d'effectuer un raclement du matériau sur toute la profondeur et la tête (13) ayant une section transversale inférieure, égale ou supérieure à la section transversale de la tige (12), dans des proportions déterminées en fonction de la nature et/ou de l'humidité du matériau à prélever.

2. Dispositif selon la revendication 1, **caractérisé en ce que** la section (120) transversale de la tige (12) a la forme d'une spirale rainurée (121) vers l'intérieur de la section (120) suivant la ligne de jonction des deux extrémités libres de la spirale formant ainsi une partie saillante.

3. Dispositif selon la revendication 2, **caractérisé en ce que** la section (120) transversale de la tige a la forme d'un disque rainuré (121) vers l'intérieur de la section (120), un des bords (122) du disque, situé de part et d'autre de la rainure (121), étant étiré vers l'extérieur pour former la partie saillante.

4. Dispositif selon l'une des revendications 1 à 3, **caractérisé en ce que** la section maximale de la tête est supérieure à la section du corps principal de la tige (12), c'est à dire pris sans la partie saillante, dans une proportion maximale de 40%.

5. Dispositif selon l'une des revendications 1 à 4, **caractérisé en ce que** la partie saillante (15) est amovible de la tige (12).

6. Dispositif selon l'une des revendications 1 à 5, **caractérisé en ce que** la partie saillante est inclinée d'un certain angle vers l'extérieur dans le sens opposé au sens de raclage.

7. Dispositif selon l'une quelconque des revendications 1 à 6, **caractérisé en ce que** la tige (12) est creuse et **en ce qu'**une face (122) interne de la rainure (121), appartenant à la partie saillante, est ouverte de manière à laisser pénétrer la terre dans la tige (12) creuse lors de la rotation de la tarière (1).

8. Dispositif selon l'une des revendications 1 à 7, **caractérisé en ce que** la rainure est parallèle à un plan radial de la tige (12).

9. Dispositif selon l'une des revendications 1 à 8, **caractérisé en ce que** la section (120) transversale de la tige (12) peut avoir des dimensions variables le long de la tige (12).

10. Dispositif selon la revendication 9, **caractérisé en ce que** la section (120) transversale de la tige (12) sur la partie supérieure de la tige (12) a des dimensions supérieures à la section sur la partie inférieure de la tige (12) de manière à prélever la terre sèche en surface.

11. Dispositif selon l'une quelconque des revendications 1 à 10, **caractérisé en ce que** la rainure (121) est suffisamment large pour recueillir la terre raclée lors de la rotation de la tige (12).

12. Dispositif selon l'une quelconque des revendications 1 à 11, **caractérisé en ce que** la tige (12) est graduée de bas en haut de manière à connaître la profondeur d'enfoncement de l'outil.

13. Dispositif selon l'une des revendications 1 à 12, **caractérisé en ce que** la tête (13) a la forme d'une olive montée symétriquement sur la tige (12) suivant le plus grand axe de l'olive.

14. Dispositif selon la revendication 13, **caractérisé en ce que** plusieurs diamètres de tête (13) en olive sont disponibles suivant la nature et/ou l'humidité du terrain.

15. Dispositif selon la revendication 13 ou 14, **caractérisé en ce que** les têtes (13) en olive sont vissées sur la tige (12).

16. Dispositif selon l'une des revendications 1 à 15, **caractérisé en ce qu'**une barre (14) transversale par rapport à l'axe de la tige (12) placée entre le volant (10) et la tête (13) permet de faciliter la pénétration de l'outil dans le sol.

17. Dispositif selon l'une des revendications 1 à 16, **caractérisé en ce que** sur le volant (10), se dresse au moins une poignée (11) pour faciliter la préhension de l'outil lors de sa rotation.

18. Dispositif selon l'une des revendications 1 à 17, **caractérisé en ce qu'**un moyen d'entraînement est destiné à enfoncer la tarière (1) dans le sol.

19. Dispositif selon la revendication 17, **caractérisé en ce qu'**il comporte à son extrémité opposée à l'extrémité d'enfoncement, un embout (124) mâle destiné à s'accoupler coaxialement avec un embout (162) femelle d'un marteau à inertie (16), une tige coulissant dans le marteau à inertie (16), dans le prolongement de l'embout femelle (162), pour venir frapper l'embout (124) mâle afin d'enfoncer le dispositif.

20. Dispositif selon la revendication 19, **caractérisé en ce que** le volant (10) est flottant par l'intermédiaire d'éléments d'amortissement (31) permettant d'amortir l'onde de choc et les vibrations générées lors de la frappe.

## Claims

1. Device for taking samples from a material of granular or powdery nature, comprising a rod (12) at one end of which is mounted a rotating means (10) designed to rotate the tool and at the other end of which there is a driving head (13), said head (13) being mounted symmetrically on the rod (12) and comprising lower and side parts having a profiled shape, the rod (12) having a given shape, **characterised in that** the rod comprises at least one longitudinal groove and has, in the extension of one of the inner faces (122) of the groove, a part (15) projecting towards the outside of the rod (12) which, over the entire length of the rod (12), makes it possible, by rotating the rod (12), to scrape material over the whole depth, and the head (13) having a lower cross section, greater than or equal to the cross section of the rod (12), in proportions determined as a function of the nature and/or moisture of the material to be sampled.

2. Device according to Claim 1, **characterised in that** the cross section (120) of the rod (12) has the shape of a spiral (121) grooved towards the interior of the section (120) along the line joining the two free ends of the spiral thus forming a projecting portion.

3. Device according to Claim 2, **characterised in that** the cross section (120) of the rod has the shape of a disc (121) grooved towards the interior of the section (120), one of the edges (122) of the disc, located on either side of the groove (121), being stretched outwards in order to form the projecting portion.

4. Device according to one of Claims 1 to 3, **characterised in that** the maximum section of the head is larger than the section of the main body of the rod (12), i.e. taken without the projecting portion, by a maximum proportion of 40%.

5. Device according to one of Claims 1 to 4, **characterised in that** the projecting portion (15) is removable from the rod (12).

6. Device according to one of Claims 1 to 5, **characterised in that** the projecting portion is tilted at a certain angle outwards in the opposite direction to the direction of scraping.

7. Device according to any one of Claims 1 to 6, **characterised in that** the rod (12) is hollow and **in that** an inner face (122) of the groove (121), belonging to the projecting portion, is open so as to allow the soil in the hollow rod (12) to be penetrated during the rotation of the auger (1).

8. Device according to one of Claims 1 to 7, **characterised in that** the groove is parallel to a radial plane of the rod (12).

9. Device according to one of Claims 1 to 8, **characterised in that** the cross section (120) of the rod (12) can have variable dimensions along the rod (12).

10. Device according to Claim 9, **characterised in that** the cross section (120) of the rod (12) on the upper part of the rod (12) has dimensions greater than the section on the lower part of the rod (12) so as to sample dry soil at the surface.

11. Device according to any one of Claims 1 to 10, **characterised in that** the groove (121) is wide enough to collect the soil scraped during the rotation of the rod (12).

12. Device according to any one of Claims 1 to 11, **characterised in that** the rod (12) is graduated upwards so as to indicate the depth by which the tool is driven in.

13. Device according to one of Claims 1 to 12, **characterised in that** the head (13) is shaped like an olive mounted symmetrically on the rod (12) along the longer axis of the olive.

14. Device according to Claim 13, **characterised in that** several diameters of olive-type head (13) are available according to the nature and/or the moisture of the soil.

15. Device according to Claim 13 or 14, **characterised in that** the olive-type heads (13) are screwed to the rod (12).

16. Device according to one of Claims 1 to 15, **characterised in that** a bar (14), which is transverse to the axis of the rod (12) placed between the rotating means (10) and the head (13), makes it possible to facilitate the penetration of the tool into the soil.

17. Device according to one of Claims 1 to 16, **characterised in that** at least one handle (11) stands on the rotating means (10), in order to facilitate grasping of the tool during its rotation.

18. Device according to one of Claims 1 to 17, **characterised in that** a drive means is designed to drive the auger (1) into the soil.

19. Device according to Claim 17, **characterised in that** it comprises, at its end opposite the driving end, a male end-piece (124) designed to couple coaxially with a female end-piece (162) of a slide hammer (16), a tube sliding within the slide hammer (16), in the extension of the female end-piece (162), so as to strike the male end-piece (124) in order to drive in the device.

20. Device according to Claim 19, **characterised in that** the rotating means (10) is made to float by means of damping members (31) allowing the damping of the shock wave and vibrations generated during striking.

## Patentansprüche

1. Vorrichtung zur Entnahme von Proben in einem Material körniger oder pulverartiger Beschaffenheit, die einen Schaft (12) aufweist, wobei an einem Ende desselben ein Rad (10) montiert ist, das vorgesehen ist, um das Werkzeug zum Drehen zu bringen, und an dem anderem Ende desselben ein Kopf (13) zum Versenken angeordnet ist, wobei der Kopf (13) symmetrisch an dem Schaft (12) montiert ist und untere und seitliche Abschnitte mit einer Profilform aufweist, wobei der Schaft (12) eine bestimmte Form hat, **dadurch gekennzeichnet, dass** der Schaft mindestens eine längsverlaufende Nut aufweist und in der Verlängerung von einer der Innenseiten (122) der Nut einen Abschnitt (15) aufweist, der von dem Schaft (12) in Richtung nach außen hervorsteht, der über die gesamte Länge des Schaftes (12) durch Drehen des Schaftes (12) ein Abschaben des Materials über die gesamte Tiefe ermöglicht, und wobei der Kopf (13) einen Querschnitt aufweist, der kleiner, gleich oder größer als der Querschnitt des Schaftes (12) ist, mit Größenverhältnissen, die in Abhängigkeit von der Beschaffenheit und/oder der Feuchtigkeit des zu entnehmenden Materials bestimmt werden.

2. Vorrichtung gemäß Anspruch 1, **dadurch gekennzeichnet, dass** der Querschnitt (122) des Schaftes (12) die Form einer Spirale aufweist, die in Richtung zu dem Inneren des Schnitts (120) entlang der Verbindungslinie der beiden freien Enden der Spirale eingekerbt ist, wobei auf diese Art ein hervorspringender Abschnitt gebildet wird.

3. Vorrichtung gemäß Anspruch 2, **dadurch gekennzeichnet, dass** der Querschnitt (120) des Schaftes die Form einer Scheibe (121) aufweist, die in Richtung zu dem Inneren des Schnitts (120) eingekerbt ist, wobei sich einer der Ränder (122) der Scheibe, die auf beiden Seiten der Nut (121) positioniert sind, in Richtung nach außen erstreckt, um den hervorspringenden Abschnitt zu bilden.

4. Vorrichtung gemäß einem der Ansprüche 1 bis 3, **dadurch gekennzeichnet, dass** der maximale Schnitt des Kopfes größer als der Schnitt des Hauptkörpers des Schaftes (12) ist, das heißt ohne den hervorspringenden Abschnitt betrachtet, in einem maximalen Verhältnis von 40%.

5. Vorrichtung gemäß einem der Ansprüche 1 bis 4, **dadurch gekennzeichnet, dass** der hervorspringende Abschnitt (15) nicht von dem Schaft (12) ablösbar ist.

6. Vorrichtung gemäß einem der Ansprüche 1 bis 5, **dadurch gekennzeichnet, dass** der hervorspringende Teil um einen bestimmten Winkel in entgegengesetzter Richtung zu der Abschabrichtung nach außen geneigt ist.

7. Vorrichtung gemäß einem der Ansprüche 1 bis 6, **dadurch gekennzeichnet, dass** der Schaft (12) hohl ist und dass eine Innenseite (122) der Nut (121), die zu dem hervorspringenden Abschnitt gehört, offen ist, um die Erde beim Drehen des Bohrers (1) eindringen zu lassen.

8. Vorrichtung gemäß einem der Ansprüche 1 bis 7, **dadurch gekennzeichnet, dass** die Nut zu einer radialen Ebene des Schaftes (12) parallel isst.

9. Vorrichtung gemäß einem der Ansprüche 1 bis 8, **dadurch gekennzeichnet, dass** der Querschnitt (120) des Schaftes (12) Abmessungen aufweisen kann, die entlang dem Schaft (12) variabel sind.

10. Vorrichtung gemäß Anspruch 9, **dadurch gekennzeichnet, dass** der Querschnitt (120) des Schaftes (12) an dem oberen Abschnitt des Schaftes (12) Abmessungen hat, die größer als der Schnitt an dem unteren Abschnitt des Schaftes (12) sind, um an der Oberfläche trockene Erde zu entnehmen.

11. Vorrichtung gemäß einem der Ansprüche 1 bis 10, **dadurch gekennzeichnet, dass** die Nut (121) ausreichend breit ist, um die beim Drehen des Schaftes (12) abgeschabte Erde aufzunehmen.

12. Vorrichtung gemäß einem der Ansprüche 1 bis 11, **dadurch gekennzeichnet, dass** der Schaft (12) von unten nach oben gestuft ist, um die Eindringtiefe des Werkzeugs zu erkennen.

13. Vorrichtung gemäß einem der Ansprüche 1 bis 12, **dadurch gekennzeichnet, dass** der Kopf (13) die Form einer Olive aufweist, die entlang der größten Achse der Olive symmetrisch an dem Schaft (12) montiert ist.

14. Vorrichtung gemäß Anspruch 13, **dadurch gekennzeichnet, dass** je nach der Beschaffenheit und/oder Feuchtigkeit des Bodens mehrere Durchmesser eines Kopfes (13) in Olivenform verfügbar sind.

15. Vorrichtung gemäß Anspruch 13 oder 14, **dadurch gekennzeichnet, dass** die Köpfe (13) in Olivenform an den Schaft (12) geschraubt sind.

16. Vorrichtung gemäß einem der Ansprüche 1 bis 15, **dadurch gekennzeichnet, dass** eine relativ zu der Achse des Schaftes (12) quer verlaufende Stange (14), die zwischen dem Rad (10) und dem Kopf (13) platziert ist, ermöglicht, das Eindringen des Werkzeugs in den Boden zu erleichtern.

17. Vorrichtung gemäß einem der Ansprüche 1 bis 16, **dadurch gekennzeichnet, dass** sich auf dem Rad (10) mindestens ein Handgriff (11) erhebt, um das Greifen des Werkzeugs während seines Drehens zu erleichtern.

18. Vorrichtung gemäß einem der Ansprüche 1 bis 17, **dadurch gekennzeichnet, dass** ein Antriebsmittel vorgesehen ist, um den Bohrer (1) in den Boden einzutreiben.

19. Vorrichtung gemäß Anspruch 17, **dadurch gekennzeichnet, dass** sie an ihrem Ende, das dem Versenkungsende entgegengesetzt ist, ein Stecker-Anschluss-Stück (124) aufweist, das zum koaxialen Zusammenkuppeln mit einem Buchsen-Anschluss-Stück (162) eines Auszieh-Hammers (16) vorgesehen ist, wobei ein Schaft in dem Auszieh-Hammer (16) in der Verlängerung des Buchsen-Anschluss-Stücks (162) gleitet, um gegen das Stecker-Anschluss-Stück (124) zu stoßen, um die Vorrichtung zu versenken.

20. Vorrichtung gemäß Anspruch 19, **dadurch gekennzeichnet, dass** das Rad (10) mittels Dämpfungsmitteln (31) schwimmend gelagert ist, wodurch ermöglicht wird, die Stoßwelle und die Schwingungen, die beim Stoßen erzeugt werden, zu dämpfen.
